Europäisches Patentamt

European Patent Office

Office européen des brevets

(19)

(11) Publication number: **0 112 081**
**A1**

## EUROPEAN PATENT APPLICATION

(12)

(21) Application number: **83307201.0**

(22) Date of filing: **25.11.83**

(51) Int. Cl.³: **C 08 F 210/16**

(30) Priority: **04.12.82 GB 8234661**

(43) Date of publication of application:
**27.06.84 Bulletin 84/26**

(84) Designated Contracting States:
**AT BE DE FR GB IT NL SE**

(71) Applicant: **BP Chemicals Limited**
**Belgrave House 76 Buckingham Palace Road**
**London, SW1W 0SU(GB)**

(72) Inventor: **Speakman, John Gabriel**
**BP Chemicals Limited Bo'ness Road Grangemouth**
**Stirlingshire, FK3 9XH, Scotland(GB)**

(74) Representative: **Denbigh, Keith Warwick et al,**
**c/o The British Petroleum Company plc Patents Division**
**Chertsey Road**
**Sunbury-on-Thames Middlesex, TW16 7LN(GB)**

(54) Polymerisation process.

(57) A process for copolymerising ethylene and butene-1 by contacting together under polymerisation conditions a mixture comprising
   (a) ethylene,
   (b) butene-1 and
   (c) hydrocarbon diluent, with
   (d) a supported Ziegler catalyst, wherein the butene-1 and the hydrocarbon diluent are at least partially provided by the $C_4$ fraction of a cracked hydrocarbon which has been subjected to butadiene recovery treatment
characterised in that the supported Ziegler catalyst comprises the product of activating with a Ziegler catalyst activator a solid particulate component prepared by impregnating a hydroxyl groups-containing magnesium compound with one or more halogen-containing titanium compounds.

EP 0 112 081 A1

1

## POLYMERISATION PROCESS

The present invention relates to a process for the production of copolymers of ethylene and butene-1.

It is known that ethylene and butene-1 can be copolymerised under relatively low temperature and low pressure conditions using a coordination catalyst to provide linear copolymers having a density generally in the range 0.900 to 0.970.

Ethylene and butene-1 having sufficiently high purity for use in such copolymerisation processes are manufactured on a commercial scale by cracking hydrocarbon materials e.g. naphtha and separating the ethylene and butene by conventional techniques. The separation of the ethylene from the cracked hydrocarbon is a relatively simple process. On the other hand, the butene-1 is present in a mixed $C_4$ fraction obtained from the cracking process, which fraction contains substantial quantities of other $C_4$ hydrocarbons, for example, n-butane, butadiene, isobutene, butene-2 and traces of $C_3$ and $C_5$ hydrocarbons in addition to the butene-1. Isolation of commercially pure butene-1 from the mixed $C_4$ fraction is a difficult and costly process compared with the isolation of polymerisation quality ethylene.

European patent application No. 31168 discloses a process for producing ethylene/butene-1 copolymer wherein instead of using pure butene-1 as comonomer, the butene-1 is present in the copolymerisation in a partially purified $C_4$ cracked hydrocarbon fraction. The partially purified $C_4$ fraction is obtained by reducing the butadiene content of a $C_4$ cracked hydrocarbon fraction by a conventional butadiene extraction process and then finally reducing the butadiene content to not more than 200 ppm by a selective hydrogenation process. In EP-A-31168 it is further stated that, generally, the presence of dienes or acetylenes in the polymerisation system in an amount exceeding a certain limit interferes with the polymerisation activity of the highly active catalyst comprising a supported transition metal compound component on a solid carrier and an organo-metallic compound component, resulting in complete failure of the polymerisation or a considerably decreased yield of copolymer.

It is an object of the present invention to provide a process for copolymerising ethylene and butene-1 wherein the source of the butene-1 comonomer is a treated $C_4$ fraction of a cracked hydrocarbon and wherein a defined supported Ziegler polymerisation catalyst is employed which exhibits a reduced sensitivity to the presence of butadiene impurity in the said fraction.

The present invention provides a process for copolymerising ethylene and butene-1 by contacting together under polymerisation conditions a mixture comprising,

(a) ethylene and

(b) butene-1 and

(c) hydrocarbon diluent, with

(d) a supported Ziegler catalyst, wherein the butene-1 and the hydrocarbon diluent are at least partially provided by the $C_4$ fraction of a cracked hydrocarbon which has been subjected to butadiene recovery treatment,

characterised in that the supported Ziegler catalyst comprises the product of activating with a Ziegler catalyst activator a solid particulate component prepared by impregnating a hydroxyl groups-containing magnesium compound with one or more halogen-containing titanium compounds.

The ethylene employed in the process of the present invention is suitably any commercial grade of ethylene free from impurities which would deleteriously affect the catalyst.

Oil refineries conventionally produce a $C_4$ fraction comprising butene-1, isobutene, butadiene, isobutane, n-butane and butene-2 together with traces of other $C_3$, $C_4$ and $C_5$ hydrocarbons by

distillation of cracked hydrocarbon material. Recovery of butadiene from the $C_4$ fraction, for example, by extraction processes such as those using acetonitrile or N-methyl pyrollidone as solvent, is well known in the art. The $C_4$ fraction which has been subjected to butadiene recovery treatment (hereinafter referred to as "butadiene raffinate") generally comprises the $C_3$, $C_4$ and $C_5$ hydrocarbons present in the original $C_4$ fraction, but the butadiene content thereof is reduced, for example, to less than 5000 parts per million (0.5 weight %) based on the total butadiene raffinate.

The butadiene raffinate employed in the process of the present invention preferably comprises at least 10 weight %, most preferably at least 15 weight % of butene-1. The quantity of butadiene in the raffinate is preferably not more than 0.2 weight %, most preferably not more than 0.1 weight %. The weight percentages of each component of the butadiene raffinate are based on the total weight of the butadiene raffinate.

The mole ratio of ethylene to butene-1 employed in the copolymerisation of the present invention is suitably in the range 100:1 to 1:10, preferably in the range 5:1 to 1:2.

If desired, one or more additional comonomers selected from propylene and $C_5$ to $C_{20}$ 1-olefins may be employed in the copolymerisation process of the present invention. Examples of additional comonomers are propylene, hexene-1, 4-methylpentene-1 and octene-1. The quantity of additional comonomer employed is suitably in the range 0 to 20 moles, preferably 0 to 5 moles per mole of ethylene.

The mixture of $C_4$ hydrocarbons present in the butadiene raffinate employed in the copolymerisation of the present invention act as a diluent for the monomeric materials. However, in some copolymerisation processes operated in accordance with the present invention it may be desirable to employ additional diluent in the ethylene/butene-1 copolymerisation process. Examples of suitable additional diluents for this purpose are liquid or gaseous saturated hydrocarbons, for example, methane, ethane, propane, butane, isobutane, hexane and cyclohexane, or inert gases, for example nitrogen and argon. Isobutane is preferred.

The hydroxyl groups-containing magnesium compound employed in preparing the solid particulate catalyst component can be, for example, magnesium hydroxide, magnesium oxide or magnesium hydroxychloride. Magnesium oxide is preferred. Grades of magnesium oxide that can be employed in the present invention preferably have a particle size greater than 0.01 micron, for example 0.01 to 500 microns, most preferably 1 to 100 microns. Magnesium oxide having a surface area in the range 1 to 1000 square metres per gram and a hydroxyl content not greater than 0.2 OH groups per magnesium atom is particularly preferred. It is preferred to employ magnesium oxide that has been obtained by the thermal decomposition of magnesium hydroxide although magnesium oxides obtained by for example thermally decomposing magnesium carbonate, magnesium nitrate or basic magnesium carbonate or by combustion of magnesium metal are also suitable.

The one or more halogen containing titanium compounds employed in the preparation of the solid particulate catalyst component can be, for example, halides, haloalkoxides or oxyhalides of titanium. The halogen is preferably chlorine or bromine, chlorine being particularly preferred. Preferred halogen-containing titanium compounds are those compounds having the empirical formula

$$Ti (OR)_n Cl_{4-n}$$

wherein n is zero or an integer or fraction less than 4 and R is a hydrocarbon group, for example an alkyl, cycloalkyl, aryl or arylalkyl group. Preferably R is an alkyl group containing 1-6 carbon atoms. Examples of compounds having this formula are titanium tetrachloride, trichlorotitanium ethylate (Ti (OEt)Cl$_3$) and dichloro-titanium-diisopropylate (Ti (OiPr)$_2$Cl$_2$). Compounds of this type can be prepared, for example, by the reaction of titanium tetrachloride with an alcohol or by the reaction of titanium tetrachloride with a titanium alkylate or a chloro-titanium alkylate.

The quantity of halogen-containing titanium compound employed is suitably at least sufficient to provide a concentration of 0.1 to 30 weight %, preferably 0.5 to 15 weight %, most preferably 1 to 7 weight % of titanium based on the total weight of solid particulate catalyst component. If desired, an excess, for example up to 100 times the concentration in the final solid particulate catalyst component, of halogen-containing titanium compound may be employed, provided that the final component contains 0.1 to 30 weight % of titanium.

Transition metal compounds, for example, vanadium, zirconium or chromium compounds can be employed, if desired, in addition to the halogen-containing titanium compound in the preparation of catalyst component. Examples of such additional transition metal compounds are zirconium tetrachloride and vanadyl chloride ($VOCl_3$). When such additional transition metal compounds are employed it is preferred that the concentration of each metal should not exceed 5 atoms per atom of titanium present in the catalyst component.

The impregnation of the hydroxyl groups-containing magnesium with the halogen-containing titanium compound can be carried out, for example, by mixing the materials together at any desired temperature. It is preferred to carry out the impregnation in the presence of a liquid hydrocarbon diluent. Examples of suitable hydrocarbon diluents are hexane, cyclohexane, isobutane, isopentane, toluene, gasoline or naphtha. Preferably a hydrocarbon diluent is employed which is a solvent for the halogen-containing transition metal compound. It is preferred to carry out the impregnation by refluxing together a mixture of the halogen-containing titanium compound, the magnesium compound and the hydrocarbon diluent at a temperature in the range 50 to 150°C.

In a preferred embodiment of the present invention the halogen-containing titanium compound is reacted with an alcohol prior to or during the impregnation of the magnesium compound. The reaction of the alcohol with the halogen-containing titanium compound liberates hydrogen halide and this is believed to be beneficial in the impregnation step. The alcohol is preferably a straight or branched chain aliphatic alcohol containing 1 to 12 carbon atoms. Alcohols having 1 to 6 carbon atoms are particularly preferred, for example methanol, ethanol, isopropanol and secondary butanol. The quantity of alcohol employed in this preferred embodiment is suitably 0.1 to 4.0 moles, preferably 1.0 to 3.5 moles, most preferably 1.5 to 3.0 moles per mole of halogen-containing titanium compound.

In this preferred embodiment the impregnation of the magnesium compound can be carried out for example by reacting the halogen-containing titanium compound with the aliphatic alcohol in the presence of the magnesium compound. Alternatively the halogen-containing titanium compound and the alcohol can be reacted together and then added to the magnesium compound. The reaction between the halogen-containing titanium compound and the alcohol is preferably carried out in the presence of a liquid diluent, examples of suitable diluents being hexane, cyclohexane, isobutane, isopentane, toluene and mixed aliphatic and aromatic hydrocarbon solvents. The reaction can be carried out at any desired temperature. Normally temperatures in the range 0 to 150°C are found to be satisfactory.

Our GB-A-1553673 discloses a process for the production of a supported Ziegler catalyst component comprising reacting together under anhydrous conditions a halogen-containing transition metal compound, for example a halogen-containing titanium compound, and an aliphatic alcohol, and simultaneously or subsequently impregnating an anhydrous hydroxyl groups-containing support material comprising magnesium oxide, magnesium hydroxide or magnesium hydroxychloride with the reaction mixture to produce the solid catalyst component. Reference may be made to GB-A-1553673 for further details regarding the preparation of a solid catalyst component which can be employed in preparing the catalyst component of the present invention.

After completion of the impregnation of the magnesium compound with the halogen-containing transition metal compound, the solid catalyst component may be found to contain unadsorbed titanium compound.

If the solid catalyst component is found by the following test procedure to contain more than 0.05 g of unadsorbed titanium per g of solid component, it is preferred to treat the solid component to reduce the level of unadsorbed titanium compound until the concentration of titanium as measured by the test procedure falls to 0.05 g/g or less. Most preferably the concentration measured by this test procedure is 0.02 g/g or less. The test procedure involves stirring a 1 gram of sample of the solid catalyst component for 5 minutes with a liquid hydrocarbon diluent (100 mls) which is a solvent for the titanium compound, and the hydrocarbon is then decanted. A sample of the hydrocarbon is then analysed for titanium by conventional means and the total quantity of titanium extracted from the 1 gram sample is calculated.

When it is desired to treat the solid catalyst component to remove unadsorbed titanium compound any suitable separation techniques known in the art may be employed. For example, if a volatile titanium compound is employed in the impregnation, any unadsorbed volatile titanium compound can be removed by evaporation under vacuum and/or using elevated temperature and/or by purging with inert gas (e.g. nitrogen or argon). Another example of a suitable separation technique is to extract the unadsorbed titanium compound using an inert solvent, for example, a hydrocarbon solvent. The extraction may be carried out at any desired temperature, for example at ambient temperature or at the boiling point of the solvent.

The Ziegler catalyst activator employed in the process of the present invention is an organometallic compound, an organoboron compound, a boron hydride, or a metal hydride wherein the metal is present in Group I, II, III or IV of the Periodic Table. Preferred activators are organo-aluminium compounds, for example, triethyl aluminium, tri-n-butyl aluminium, trioctyl aluminium and diethyl aluminium chloride.

The quantity of Ziegler catalyst activator employed is suitably 1 to 500 moles, preferably 3 to 20 moles per gram atom of titanium present in the solid particulate component.

The activation of the solid particulate component can be carried out "in situ" in the copolymerisation vessel or can be carried out prior to feeding the catalyst components to the copolymerisation, or a combination of these techniques can be employed as desired. It is preferred to activate the catalyst in a separate stage prior to feeding the produced activated catalyst to the copolymerisation.

It is preferred to carry out all steps of the catalyst preparation and activation under anhydrous conditions and in the absence of air and other substances which are known to affect deleteriously the performance of Ziegler catalysts.

The ethylene/butene-1 copolymerisation conditions employed in the process of the present invention can be such that copolymerisation occurs in the gas-phase or in the liquid phase under batch or continuous conditions. Illustrative of such copolymerisation conditions are gas-fluidised bed copolymerisation, stirred gas-phase copolymerisation, solution copolymerisation and slurry copolymerisation. Slurry copolymerisation and solution copolymerisation are preferred. When the copolymerisation process of the present invention is operated under slurry process conditions, it is found that the butadiene raffinate acts as a good "non-solvent" for the produced copolymer.

In a preferred embodiment of the present invention the copolymerisation is carried out by feeding the monomeric ethylene, the butadiene raffinate and, if necessary, additional hydrocarbon diluent to a polymerisation reactor and contacting the mixture therein with the Ziegler catalyst under conditions of temperature and pressure such that copolymerisation occurs in the liquid hydrocarbon mixture and the copolymer forms as particles suspended therein. This type of copolymerisation process is an example of slurry copolymerisation and is frequently referred to in the art as "particle form (co)polymerisation". It is preferred to conduct the particle form (co)polymerisation in a "loop reactor" wherein the polymerisation mixture is circulated continuously around a pipe loop to which is fed the monomeric ethylene, the butadiene raffinate, the catalyst and additional hydrocarbon diluent, if necessary and from which the particulate copolymer is removed, for example by means of a settling leg. Loop reactors of this type are described for example in GB-A-886784 and in GB-A-899156.

The concentrations of the monomers in the copolymerisation process of the present invention may be adjusted to the desired values, for example, by adjusting the quantity (or rate of addition) of the monomer or monomer-containing material fed to the copolymerisation, by adjusting the quantity of diluent (if any) or by adjusting the pressure. For example, when the copolymerisation of the ethylene and butene-1 is conducted under continuous copolymerisation conditions, the ethylene, the butadiene raffinate and diluent (if any) can for example be fed to a reactor containing the catalyst and the temperature and pressure adjusted to give the desired rate of polymerisation. During the course of the copolymerisation, the ethylene and butene copolymerise to leave the butadiene raffinate (and any additional diluent) depleted in ethylene and butene-1. The desired concentration of ethylene and butene-1 may be maintained, for example, by feeding fresh ethylene and butadiene raffinate to the reactor and removing product and diluent continuously or intermittently from the reactor.

The copolymerisation can, if desired be carried out in the presence of hydrogen gas or other chain transfer agent to control the average molecular weight of the produced copolymer. The invention is further illustrated by the following examples:-

Examples 1 and 2

Catalyst Preparation

2.24 kg (37.3 moles) isopropanol were mixed with 5 litres of dry cyclohexane in a dry, nitrogen purged, 20 litre round bottomed flask equipped with stirrer, heating mantle and reflux condenser. 3.35 kg (17.7 moles) $TiCl_4$ were added, with stirring, over a period of approximately 2 hours. After addition of the $TiCl_4$ was complete, the mixture was heated under reflux, with stirring, for 3 hours. The mixture was allowed to cool and a slurry of 500 g (12.4 moles) magnesia (Maglite K, Merck and Co) in dry cyclohexane was added. The resulting mixture was heated under reflux, with stirring, for 2 hours, allowed to cool and then filtered and washed with fresh, dry cyclohexane. The catalyst component was handled as a slurry and stored under $N_2$.

The produced catalyst component had the following analysis:

Ti 5.6 wt%, Mg 19.1 wt%, Cl 36.4 wt%.

Preparation of the butadiene raffinate

The butadiene raffinate was obtained by extraction of butadiene from a $C_4$ cracking fraction. Two samples of butadiene raffinate were employed (see Table 1).

Copolymerisation of ethylene and butene-1

The copolymerisation was carried out in a 2.3 litre stainless steel stirred autoclave which was purged with inert gas. The solid catalyst component was introduced into the autoclave as a slurry in cyclohexane and maintained at 60 to 75°C. Butadiene raffinate (1 litre) containing aluminium triethyl was introduced and the mixture brought up to copolymerisation temperature (85°C). The autoclave was pressurised by admitting hydrogen (6.9 bar) followed by ethylene to give a total pressure of 41.4 bar. The copolymerisation conditions and copolymer properties are set out in Table 2.

Table 1

Composition of Butadiene Raffinate

|  | Example 1 wt % | Example 2 wt % |
|---|---|---|
| Isobutane | 6.8 | 4.6 |
| n-butane | 18.4 | 8.1 |
| butene-1 | 24.5 | 29.2 |
| isobutene | 39.0 | 43.1 |
| butene-2 | 11.2 | 14.9 |
| butadiene | 0.03 | 0.09 |

## Table 2

### Bench Scale Copolymerisation Using Butadiene Raffinate as Diluent

| Example | Wt. Catalyst Component (mg) | Wt. AlEt$_3$ Activator (mg) | Reactor Temperature (°C) | Pressure bar | | Polymerisation Time (min) | Polymer Yield (g) | Catalyst Productivity (kg/kg) | Catalyst Activity (kg/kgh) | Polymer Properties | |
|---|---|---|---|---|---|---|---|---|---|---|---|
| | | | | Total | H$_2$ | | | | | MI$_{2.16}$ Note 1 | density (kgm$^{-3}$) Note 2 |
| 1 | 98 | 224 | 85 | 41.4 | 6.9 | 53 | 284 | 2900 | 3050 | 2.1 | 929 |
| 2 | 98 | 224 | 85 | 41.4 | 6.9 | 41 | 280 | 2860 | 4180 | 4.6 | 927 |

Notes:

1) Determined according to BS 2783, method 105C : units are g per 10 minutes.

2) Determined by a method similar to that given in BS 2782, Part 5, 1965, Method 509B.

Claims:

1. A process for copolymerising ethylene and butene-1 by contacting together under polymerisation conditions a mixture comprising

(a) ethylene,

(b) butene-1 and

(c) hydrocarbon diluent, with

(d) a supported Ziegler catalyst, wherein the butene-1 and the hydrocarbon diluent are at least partially provided by the $C_4$ fraction of a cracked hydrocarbon which has been subjected to butadiene recovery treatment (herein referred to as butadiene raffinate),

characterised in that the supported Ziegler catalyst comprises the product of activating with a Ziegler catalyst activator a solid particulate component prepared by impregnating a hydroxyl groups-containing magnesium compound with one or more halogen-containing titanium compounds.

2. A process as claimed in claim 1 wherein the butadiene raffinate contains less than 5,000 parts per million of butadiene based on the total butadiene raffinate.

3. A process as claimed in claim 1 or 2 wherein the butadiene raffinate comprises at least 10 weight per cent of butene-1 based on the butadiene raffinate.

4. A process as claimed in any one of the preceding claims wherein the mole ratio of ethylene to butene-1 employed in the copolymerisation is in the range 100:1 to 1:10.

5. A process as claimed in any one of the preceding claims wherein the copolymerisation includes up to 20 moles per mole of ethylene of one or more additional comonomers selected from propylene and $C_5$ to $C_{20}$ 1-olefins.

6. A process as claimed in any one of the preceding claims wherein the hydroxyl groups-containing magnesium compound is magnesium oxide.

7. A process as claimed in claim 6 wherein the magnesium oxide has a hydroxyl content not greater than 0.2 OH groups per magnesium atom.

8. A process as claimed in any one of the preceding claims wherein the halogen-containing titanium compound has the empirical formula $Ti(OR)_nCl_{4-n}$ wherein n is zero or an integer or fraction less than 4 and R is a hydrocarbon group.

9. A process as claimed in any one of the preceding claims wherein the halogen-containing titanium compound is reacted with alcohol prior to or during the impregnation of the magnesium compound.

10. A process as claimed in claim 9 wherein the alcohol is a straight or branched chain aliphatic alcohol containing 1 to 12 carbon atoms.

11. A process as claimed in any of the preceding claims wherein the Ziegler catalyst activator is an organo-aluminium compound.

12. A process as claimed in any one of the preceding claims wherein the copolymerisation reaction is carried out under slurry or solution conditions.

13. A process substantially as hereinbefore described in the Examples.

14. Copolymers produced by the process claimed in any one of the preceding claims.

0112081

Application number

EP  83 30 7201

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| D,Y | EP-A-0 031 168  (SUMITOMO)<br>* Claims 1-5,8-10 * | 1-4 | C 08 F 210/16 |
| Y | GB-A-1 415 898  (HÜLS)<br>*  Claims  1-3;  page  2,  lines 37-49; 95-116; page 3, line 114 - page 4, line 4; example 5 * | 1-5 | |
| D,Y | GB-A-1 553 673  (B.P. CHEMICALS LTD.)<br>*  Claims  1-21;  page  2,  lines 89-107 * | 1,6-14 | |

TECHNICAL FIELDS SEARCHED (Int. Cl. 3)

C 08 F

The present search report has been drawn up for all claims

| Place of search | Date of completion of the search | Examiner |
|---|---|---|
| THE HAGUE | 06-03-1984 | WEBER H. |